# FASCICULE DE BREVET EUROPEEN

(11) **EP 1 530 284 B1**
(45) Date de publication et mention de la délivrance du brevet: **16.10.2013**
(21) Numéro de dépôt: 04025612.5
(22) Date de dépôt: 28.10.2004
(51) Int. Cl.: H02P 1/18, H02P 3/12, H02P 7/06, E06B 9/68

(54) **Procédé et dispositif de régulation de la vitesse de rotation d'un moteur de volet roulant**
Verfahren und Vorrichtung zur Drehzahlregelung eines Motors für einen Rollladen
Method and apparatus for regulating the rotational speed of a motor for a roller shutter

(30) Priorité: 05.11.2003 FR 0313005
(43) Date de publication de la demande: 11.05.2005
(73) Titulaire: Somfy SAS, 74300 Cluses (FR)
(72) Inventeur: Bruno, Serge, 74460 Marnaz (FR)
(74) Mandataire: Bugnion Genève

(56) Documents cités:
- CH-A- 685 221
- US-A- 3 919 611
- US-A- 5 361 022
- US-B1- 6 236 175
- US-B1- 6 373 207
- PATENT ABSTRACTS OF JAPAN vol. 009, no. 263 (E-351), 19 octobre 1985 (1985-10-19) & JP 60 109778 A (OKI DENKI KOGYO KK), 15 juin 1985 (1985-06-15)

## Description

L'invention se rapporte à un procédé de régulation de la vitesse de rotation d'un moteur à courant continu destiné à entraîner un élément mobile de fermeture, d'occultation ou de protection solaire équipant un bâtiment. Elle concerne également un dispositif pour la mise en oeuvre de ce procédé.

Dans les applications domotiques, en particulier les volets roulants et les portes de garages, la charge entraînée par le moteur, constituée par l'élément mobile, peut varier fortement en fonction de la position de ce dernier. Dans certaines positions, les efforts de pesanteur s'appliquant sur l'élément mobile sont suffisants pour l'entraîner vers sa position basse. Cependant, dans d'autres positions ces efforts sont très insuffisants et il faut par conséquent entraîner l'élément mobile par le moteur.

Par exemple, dans le cas d'un volet roulant complètement enroulé, le couple dû aux efforts de pesanteur est nul ou très faible. Ce n'est qu'au fur et à mesure du déroulement que, la masse suspendue augmentant, le couple exercé autour de l'axe d'enroulement devient important. Une phase dans laquelle le moteur est alimenté est donc nécessaire pour initier la descente du volet, et vaincre les frottements.

Lorsque le couple augmente, le moteur fonctionne en générateur. Sa force électromotrice devient supérieure à la tension d'alimentation. Les dispositifs d'alimentation n'étant pas réversibles, aucun courant ne peut être débité par le moteur à courant continu dans ce fonctionnement générateur. Il n'y a donc pas de couple résistant électromagnétique et le moteur à courant continu s'emballe.

Il est connu de dissiper l'énergie électrique fournie par un moteur à courant continu fonctionnant en générateur dans une résistance pour le ralentir. Le brevet US 6,078,156 décrit un procédé de commande de décélération d'un tambour rotatif à grande inertie lorsque le moteur qui l'a mis en mouvement fonctionne en générateur. On connaît en outre de la demande JP 60 109778 et du brevet US 6,373,207 des dispositifs de freinage de moteurs à courant continu. Ils comprennent un transistor dont l'effet est d'appliquer une faible résistance en parallèle sur l'induit du moteur dans la phase de freinage. Ainsi par exemple, dans la demande JP 60 109778, tout se passe comme si une résistance équivalente à la valeur de la résistance 35 divisée par le gain en courant du transistor 34, était appliquée aux bornes de l'induit 30 du moteur. Le transistor ne fonctionne pas en régime de commutation, mais en régime linéaire, et il dissipe une puissance importante.

On connaît du brevet US 3,919,611 un dispositif de régulation de la vitesse de rotation d'un moteur à courant continu et de freinage de ce moteur. Pour réguler la vitesse de rotation du moteur, on alimente celui-ci ou on le laisse en circuit ouvert. Lorsqu'on stoppe le moteur, une faible résistance équivalente vient en parallèle sur l'induit, selon le même procédé que dans la demande JP 60 109778. Un tel dispositif ne peut pas permettre la régulation de vitesse d'un moteur subissant de fortes variations de charge lors d'une de ses phases d'entraînement, en particulier un moteur subissant pendant une de ses phases d'entraînement une forte charge ayant tendance à le faire fonctionner en générateur alors qu'il doit fonctionner en moteur pendant au moins certaines portions de cette phase d'entraînement.

On connaît du brevet US 6,236,175 un dispositif de mesure de la vitesse de rotation d'un moteur électrique à courant continu. L'alimentation du moteur est commandée par un transistor piloté par un circuit de commande. Pour mesurer la vitesse du moteur, son alimentation est coupée pendant de brèves périodes durant lesquelles on mesure indirectement la vitesse du moteur.

Le but de l'invention est fournir un procédé apportant une solution au problème cité et une amélioration aux procédés de commande connus. En particulier, l'invention propose un procéder permettant de réguler la vitesse de descente d'un élément mobile de fermeture, d'occultation ou de protection solaire et ceci à moindre coût.

A cet effet, le procédé selon l'invention est caractérisé par la partie caractérisante de la revendication 1.

Différentes variantes d'exécution du procédé sont définies par les revendications 2 à 5.

Le dispositif domotique selon l'invention est défini par la revendication 6.

Le dessin annexé représente, à titre d'exemple, un mode d'exécution du procédé de commande selon l'invention et un mode de réalisation d'un dispositif permettant la mise en oeuvre de ce procédé.

La figure 1 est un schéma électrique d'un mode de réalisation du dispositif selon l'invention.

La figure 2 est un ordinogramme d'un mode d'exécution du procédé selon l'invention.

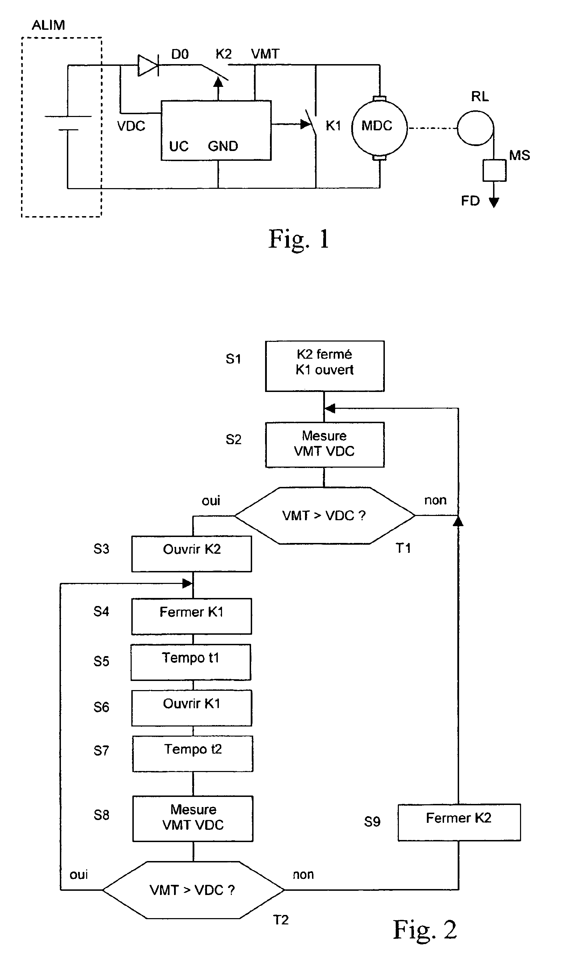

Le volet roulant motorisé 1 représenté à la figure 1 comprend principalement un générateur de tension continue ALIM, un moteur à courant continu MDC et une unité de commande UC pilotant deux interrupteurs commandés K1 et K2. Sur cette figure, on a représenté l'alimentation du moteur MDC selon des polarités qui le font tourner, lorsque l'interrupteur K2 est fermé, dans le sens de la descente du volet suspendu MS lié à un dispositif d'enroulement RL. La force de pesanteur FD agit sur le volet MS pour l'entraîner dans le sens de la descente. Les moyens nécessaires à l'alimentation du moteur dans le sens de la montée n'ont pas été représentés.

Bien que le générateur ALIM soit unidirectionnel et irréversible, on remarque qu'une diode D0 est insérée entre celui-ci et le moteur à courant continu. La diode D0 se bloque naturellement si la tension VMT aux bornes du moteur devient supérieure à la tension VDC mesurée aux bornes de l'alimentation. Dans le cas où le moteur fonctionne en générateur et où la diode se bloque, la tension VMT mesurée est égale à la force électromotrice du moteur et est donc représentative de sa vitesse. Les diverses tensions sont référencées par rapport à la masse GND.

Le générateur alimente également l'unité de commande UC chargée de l'exécution du procédé par pilotage des interrupteurs commandés K1 et K2, l'interrupteur K2 permettant de commander l'alimentation du moteur et l'interrupteur K1 permettant de court-circuiter le moteur. De même, l'unité de commande UC est raccordée à la ligne d'alimentation en aval de la diode D0 de manière à pouvoir mesurer la tension VMT ou à pouvoir la comparer à la tension VDC.

Un mode d'exécution du procédé selon l'invention, représenté à la figure 2, est décrit ci-dessous.

Dans une première étape S1, l'interrupteur K1 est ouvert et l'interrupteur K2 est fermé. Le moteur MDC est alors alimenté à travers la diode D0 et tourne dans le sens provoquant la descente du volet roulant MS.

Dans une seconde étape S2, l'unité de commande UC mesure les tensions VMT et VDC, ou des tensions images de ces tensions.

Ces tensions sont comparées lors d'une étape de test T1. Si la tension VMT n'est pas supérieure à la tension VDC, on est dans un fonctionnement moteur normal et on retourne à l'étape S2.

Par contre, si la tension VMT est supérieure à la tension VDC, alors la diode D0 est bloquée et donc la tension VMT aux bornes du moteur est égale à la force électromotrice et donne l'image de la vitesse du moteur MDC qui fonctionne alors en générateur.

Dans l'étape suivante S3, on ouvre l'interrupteur K2 puis on ferme l'interrupteur K1 dans une étape S4 pendant une durée t1 représentée par l'étape S5. La temporisation de durée t1 est prédéterminée et est par exemple comprise entre 100 à 500 µs. Pendant cette temporisation, le moteur MDC ralentit, la puissance fournie par le moteur fonctionnant en générateur étant dissipée dans sa résistance d'induit.

Dans une étape suivante S6, on ouvre l'interrupteur K1 pendant une durée t2 représenté par l'étape S7. La temporisation de durée t2 est de préférence inférieure à la temporisation de durée t1. Selon les conditions d'évolution de la charge, la vitesse du moteur MDC augmente ou non.

Lors d'une étape S8, on procède à une nouvelle mesure des tensions VMT et VDC.

Ces tensions sont ensuite comparées lors d'une étape de test T2. Si la tension VMT est de nouveau supérieure à la tension VDC, alors on retourne à l'étape S4 de façon à court-circuiter à nouveau le moteur MDC.

Par contre, si la tension VMT n'est plus supérieure à la tension VDC, on ferme l'interrupteur K2 lors de l'étape S9 de manière à alimenter le moteur MDC dans le sens précédent, puis on retourne à l'étape S2. A nouveau, le moteur reste alimenté tant qu'aucune survitesse due à la charge que constitue le volet suspendu n'est détectée.

De manière expérimentale, on constate que la force électromotrice du moteur MDC reste de cette manière toujours très voisine de la tension VDC sur toute la course de descente du volet.

Dans le cas d'un volet roulant totalement enroulé ou d'une porte de garage basculante partant d'une position complètement ouverte, le moteur doit d'abord initier le mouvement de la charge pour qu'elle se déplace dans le sens désiré. L'effort pour ce faire est néanmoins faible par rapport à celui qu'il faut exercer pour déplacer la charge dans le sens de la montée. Le courant absorbé est donc faible et la force électromotrice du moteur est légèrement inférieure à la tension d'alimentation. Quelques instants plus tard, la charge devient menante et le moteur MDC fonctionne en générateur. Avec le procédé décrit, la force électromotrice reste quasiment constante. L'utilisateur a par conséquent l'impression que son volet roulant ou sa porte de garage se déplace à vitesse régulée lors de la descente. En fin de descente, le fonctionnement moteur reprend spontanément lorsqu'il faut appliquer un effort pour comprimer des lames du volet roulant ou verrouiller la porte.

Dans des variantes de réalisation du dispositif selon l'invention, l'unité de commande UC peut être constituée d'un montage câblé spécifique déclenché par l'apparition d'une tension négative entre l'anode et la cathode de la diode D0. On peut également décaler légèrement les niveaux de comparaison entre le premier test T1 et le second T2, ou encore introduire une marge d'hystérésis.

Une même phase d'entraînement de l'élément mobile débute par un ordre de mise en mouvement de l'élément mobile et se termine par un ordre d'arrêt de l'élément mobile, ces ordres pouvant émaner d'un utilisateur ou d'un automatisme suite à la survenance d'un événement tel que notamment une détection d'obstacle, une détection d'un seuil de luminosité, une détection d'un seuil d'une grandeur quantifiant un phénomène météorologique ou une détection d'une heure programmée.

Dans cette même phase d'entraînement, le moteur est donc capable d'entraîner la charge, quand il faut vaincre des frottements, notamment en début de parcours ou lors de la rencontre de points durs, et au contraire, de résister à l'effet d'entraînement de la charge quand la masse suspendue devient importante, tout en maintenant une vitesse sensiblement constante.

## Revendications

1. Procédé de régulation de la vitesse de rotation d'un moteur à courant continu (MDC) destiné à entraîner un élément mobile (MS) de fermeture, d'occultation ou de protection solaire équipant un bâtiment, **caractérisé en ce que**, dans une même phase d'entraînement de l'élément mobile, la tension du moteur (VMT) est mesurée et le moteur (MDC) est alimenté, laissé en circuit ouvert et court-circuité selon une occurrence temporelle dépendant de la tension du moteur (VMT).

2. Procédé selon la revendication 1, **caractérisé en ce que** le moteur (MDC) est alimenté tant que sa tension (VMT) est inférieure à une tension prédéterminée et **en ce qu'**il est successivement court-circuité et laissé en circuit ouvert dans le cas contraire.

3. Procédé selon l'une des revendications précédentes, **caractérisé en ce que** le moteur (MDC) est alimenté par un générateur (ALIM) de tension continue à travers une diode (D0) et **en ce que** la tension prédéterminée est égale à la tension (VDC) du générateur de tension (ALIM).

4. Procédé selon l'une des revendications précédentes, **caractérisé en ce que** le moteur (MDC) est périodiquement mis en circuit ouvert pour effectuer les mesures de tension.

5. Procédé selon l'une des revendications 2 à 4, **caractérisé en ce que** les phases de court-circuit du moteur (MDC) ont une durée comprise entre 100 et 500 µs et **en ce que** les phases pendant lesquelles le moteur est en circuit ouvert ont une durée inférieure à la durée des phases de court-circuit.

6. Dispositif domotique (1) comprenant un moteur à courant continu (MDC) destiné à entraîner un élément mobile (MS) de fermeture, d'occultation ou de protection solaire équipant un bâtiment, un générateur (ALIM) de tension continue et une unité de commande (UC) pilotant un premier interrupteur (K1) permettant de court-circuiter le moteur et un deuxième interrupteur (K2) permettant au générateur (ALIM) d'alimenter le moteur, **caractérisé en ce qu'**il comprend une diode (D0) entre le générateur et le moteur et **en ce que** l'unité de commande présente des moyens de comparaison de la tension (VMT) aux bornes du moteur et des moyens de mise en oeuvre du procédé selon l'une des revendications 1 à 5.

## Patentansprüche

1. Verfahren zur Drehzahlregelung eines Gleichstrommotors (MDC), der zum Antrieb eines mobilen Verschluss-, Verdunkelungs- oder Sonnenschutzelements (MS) bestimmt ist, das ein Gebäude ausrüstet, **dadurch gekennzeichnet, dass** in einer selben Antriebsphase des mobilen Elements die Motorspannung (VMT) gemessen wird und der Motor (MDC), je nach einem zeitlichen Ereignis, in Abhängigkeit von der Motorspannung (VMT) versorgt, im offenen Kreis belassen und kurzgeschlossen wird.

2. Verfahren nach Anspruch 1, **dadurch gekennzeichnet, dass** der Motor (MDC) versorgt wird, solange seine Spannung (VMT) unter einer vorbestimmten Spannung liegt und dass er im gegenteiligen Fall aufeinanderfolgend kurzgeschlossen und im offenen Kreis belassen wird.

3. Verfahren nach einem der vorangehenden Ansprüche, **dadurch gekennzeichnet, dass** der Motor (MDC) über eine Diode (D0) von einem Gleichspannungsgenerator (ALIM) versorgt wird und dass die vorbestimmte Spannung gleich der Spannung (VDC) des Spannungsgenerators (ALIM) ist.

4. Verfahren nach einem der vorangehenden Ansprüche, **dadurch gekennzeichnet, dass** der Motor (MDC) periodisch in den offenen Kreis versetzt wird, um Spannungsmessungen durchzuführen.

5. Verfahren nach einem der Ansprüche 2 bis 4, **dadurch gekennzeichnet, dass** die Kurzschlussphasen des Motors (MDC) eine Dauer zwischen 100 und 500 µs inklusive haben und dass die Phasen, in denen sich der Motor im offenen Kreis befindet, eine Dauer haben, die kürzer als die Dauer der Kurzschlussphasen ist.

6. Domotische Vorrichtung (1), die einen Gleichstrommotor (MDC), der zum Antrieb eines mobilen Verschluss-, Verdunkelungs- oder Sonnenschutzelements (MS) bestimmt ist, das ein Gebäude ausrüstet, einen Gleichstromgenerator (ALIM) und eine Steuereinheit (UC), die einen ersten Schalter (K1) steuert, der es erlaubt, den Motor kurzzuschließen, und einen zweiten Schalter (K2), der es dem Generator (ALIM) erlaubt, den Motor zu versorgen, umfasst, **dadurch gekennzeichnet, dass** sie eine Diode (D0) zwischen dem Generator und dem Motor umfasst und dass die Steuereinheit Vergleichsmittel der Spannung (VMT) an den Motorklemmen und Umsetzungsmittel des Verfahrens nach einem der Ansprüche 1 bis 5 aufweist.

## Claims

1. A method for regulating the speed of rotation of a DC motor (MDC) designed to drive a moving closure, privacy or solar protection element (MS) equipping a building, **characterized in that**, in a same driving phase of the moving element, the voltage of the motor (VMT) is measured and the motor (MDC) is powered, left in open circuit and short-circuited according to a time occurrence dependent on the motor voltage (VMT).

2. The method according to claim 1, **characterized in that** the motor (MDC) is powered as long as its voltage (VMT) is below a predetermined voltage and **in that** it is successively short-circuited and left in an open circuit otherwise.

3. The method according to one of the preceding claims, **characterized in that** the motor (MDC) is powered by a DC generator (ALIM) through a diode (D0) and **in that** the predetermined voltage is equal to the voltage (VDC) of the voltage generator (ALIM).

4. The method according to one of the preceding claims, **characterized in that** the motor (MDC) is periodically put in an open circuit to perform the voltage measurements.

5. The method according to one of claims 2 to 4, **characterized in that** the short-circuit phases of the motor (MDC) have a duration comprised between 100 and 500 µs and **in that** the phases during which the motor is an open circuit have a duration shorter than the duration of the short-circuit phases.

6. A home automation device (1) comprising a DC motor (MDC) intended to drive a moving closure, privacy or solar protection element (MS) equipping a building, a DC voltage generator (ALIM) and a control unit (UC) controlling a first switch (K1) making it possible to short-circuit the motor and a second switch (K2) allowing the generator (ALIM) to power the motor, **characterized in that** it comprises a diode (D0) between the generator and the motor and **in that** the control unit has means for comparing the voltage (VMT) across the terminals of the motor and means for implementing the method according to one of claims 1 to 5.
